(19) **Europäisches Patentamt**

**European Patent Office**

**Office européen des brevets**

(11) **EP 0 814 229 B1**

(12) **EUROPEAN PATENT SPECIFICATION**

(45) Date of publication and mention
of the grant of the patent:
**17.03.1999 Bulletin 1999/11**

(51) Int Cl.6: **E06B 7/23**

(21) Application number: **97302649.5**

(22) Date of filing: **17.04.1997**

(54) **Fixing arrangements and systems for flexible strips**

Anordnung und System zur Befestigung einer flexiblen Leiste

Arrangement et système de fixation d'un profil flexible

(84) Designated Contracting States:
**DE ES FR IT**

(72) Inventor: **Collin, Sebastien**
**44440 Pannece (FR)**

(30) Priority: **18.06.1996 GB 9612720**

(74) Representative: **Foster, David Martyn et al**
**MATHISEN MACARA & CO.**
**The Coach House**
**6-8 Swakeleys Road**
**Ickenham Uxbridge UB10 8BZ (GB)**

(43) Date of publication of application:
**29.12.1997 Bulletin 1997/52**

(73) Proprietor: **DRAFTEX INDUSTRIES LIMITED**
**Edinburgh EH2 3AP, Scotland (GB)**

(56) References cited:
**EP-A- 0 006 106**     **US-A- 4 570 948**
**US-A- 5 095 657**

# Description

The invention relates to a fastening arrangement for fastening a longitudinally extending flexible strip to a substantially rigid mounting surface, comprising clip means attached to the strip and extending in a predetermined direction transversely therefrom, the clip means having a head portion including an arm made of relatively stiff resilient material extending outwardly of the clip means, the material of the arm being bendable into an insertion position close to alignment with the predetermined direction whereby it can be inserted into an aperture in the mounting surface, the material thereafter resiling into a locking position in which the arm makes a more obtuse angle with the predetermined direction and interferes with the mounting surface around the aperture to resist withdrawal of the head portion through the aperture.

The invention also relates to a fastening system for fastening a longitudinally extending sealing, trimming or guiding strip to a substantially rigid mounting surface in a motor vehicle body, comprising a plurality of clip means attached to the strip at predetermined positions spaced apart along its length and extending in generally parallel predetermined directions transversely to the length of the strip and a plurality of apertures formed in the mounting surface at predetermined positions whose spacings correspond with the spacings between the clip means, each clip means comprising a neck extending in the predetermined direction and carrying a head portion at its distal end, the head portion carrying two arms which extend transversely to the predetermined direction and which are bendable towards the neck into an insertion position to enable the head portion and the arms of each clip means to pass through a respective one of the apertures, the arms thereafter resiling into a locking position in which they extend away from the neck to an extent sufficient to interfere with the mounting surface around the aperture and resist removal of the strip from the mounting surface.

Such a fastening arrangement and system are known from US-A-5 095 657. A problem which can arise with such arrangements and systems, however, is that it can be difficult to engage the clip means with the aperture in the mounting surface. If the material of the arm is made significantly flexible to render fitting less difficult, the clip means may not be secured sufficiently firmly.

In accordance with the invention, therefore, the fastening arrangement as first set forth above is characterised in that the material of the arm is formed with a slit extending partway through its thickness to facilitate bending of the arm into the insertion position and thereby facilitating insertion of the head portion through the aperture.

In accordance with the invention, also, the fastening system as first set forth above is characterised in that each arm is formed with a slit in a surface thereof facing away from the strip and extending partway only through its thickness to facilitate bending of the arm into the insertion position.

Fixing arrangements and systems embodying the invention, and for use in fixing, sealing, trimming or guiding strips to motor vehicle bodies, will now be described, by way of example only, with reference to the accompanying diagrammatic drawings in which:

Figure 1 is a cross-section through a sealing strip including one of the fixing arrangements;

Figure 2 is a cross-section through a trimming strip incorporating one of the fixing arrangements;

Figure 3 is an enlarged view of part of the sealing strip of Figure 1;

Figure 4 is an enlarged view of part of the sealing strip of Figure 1, showing a stage during the process of mounting it in position on the vehicle body;

Figure 5 corresponds to Figure 4 but shows the sealing strip in the mounted position; and

Figure 6 is a cross-section corresponding to Figure 4, but showing the fastening arrangement during attempted removal of the strip.

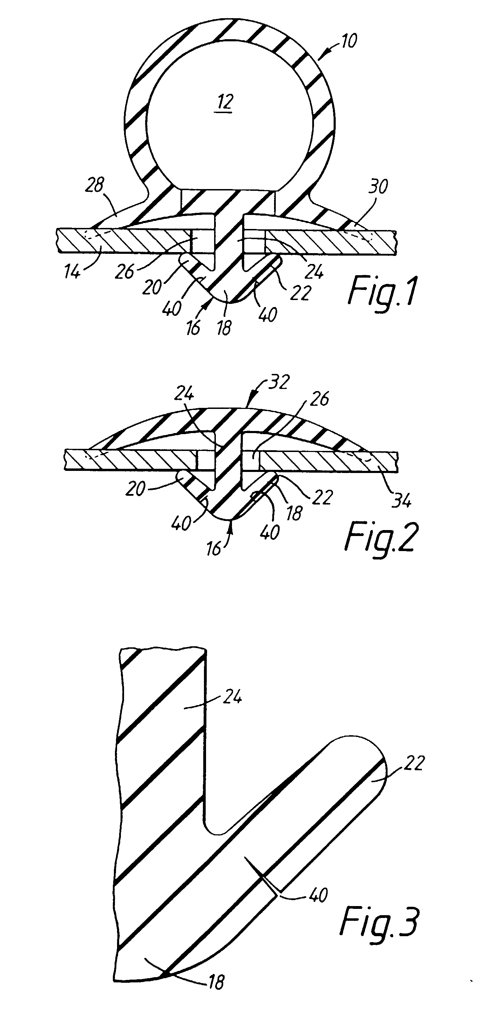

Figure 1 shows a sealing strip 10. The sealing strip 10 is in the form of a hollow tube 12 made of soft flexible material such as sponge or cellular rubber for example. The sealing strip is to be mounted along a surface 14 in a motor vehicle body, the surface 14 being (for example) the frame of an opening closable by a closure member such as a door. The sealing strip 10 is to be mounted on the frame 14 so that the tube 12 will be partially compressed by the closing door, thus providing a seal around the frame.

In accordance with a feature of the invention, the sealing strip 10 is mounted on position on the frame 14 by means of clip members indicated generally at 16 which are formed at intervals along the length of the sealing strip 10. Each clip 16 has a head 18 comprising two arms 20,22 and a neck portion 24 which connects the clip to the tube 16. The sealing strip 10 is mounted in position by inserting the heads 18 of the clips 16 through respective holes 26 formed in the frame 14 at appropriately spaced positions.

Each clip 16 may be integrally formed with the material of the tube 12, such as by an extrusion process. However, the material of the clip 16 may be of solid (that is, not cellular) form, the material of the clips 18 being co-extruded with the remainder of the material of the strip 10.

The arms 20,22 of each clip 16 are sufficiently flexible, as will be explained in more detail below, so that the arms bend inwardly towards the neck 24 to allow the clips to pass through the respective holes 26, whereafter the arms resile into the position shown in Figure 1.

The material of the tube 12 is extruded to form outwardly directed lips 28,30 which make contact with the surfaces of the frame 14 on each side of the holes 26, for providing a seal against the passage of draughts or moisture through the holes 26.

In Figure 1, the tips of these lips are shown dotted. In practice, the tips would of course be bent upwardly by contact with the frame 14.

Figure 2 shows a trimming strip 32 which is intended for trimming (that is, improving the appearance of and protecting) a surface 34. The trimming strip 32 is mounted in position on the surface 34 in the same way as the sealing strip 10 of Figure 1. Thus, the trimming strip 32 is provided with clips 16 positioned at predetermined intervals along its length which are of the same form as the clip 16 in Figure 1. The clips 16 extend through holes 26 in the surface 34 in the same way as explained in conjunction with Figure 1.

It would be understood that the holes 26 in the frame 14 of Figure 1 and in the surface 34 of Figure 2 must be positioned at spacings corresponding to the spacings between the successive clips 16 along the lengths of the strips 10,32.

Figure 3 shows an enlarged view of part of one of the clips 16, including the arm 22. As shown in Figure 3, the arm 22 is provided with a cut or slit 40 which extends through the material of the arm 22 from one of its outside surfaces to a point approximately midway through its thickness. The arm 20 is provided with a similar cut or slit 40.

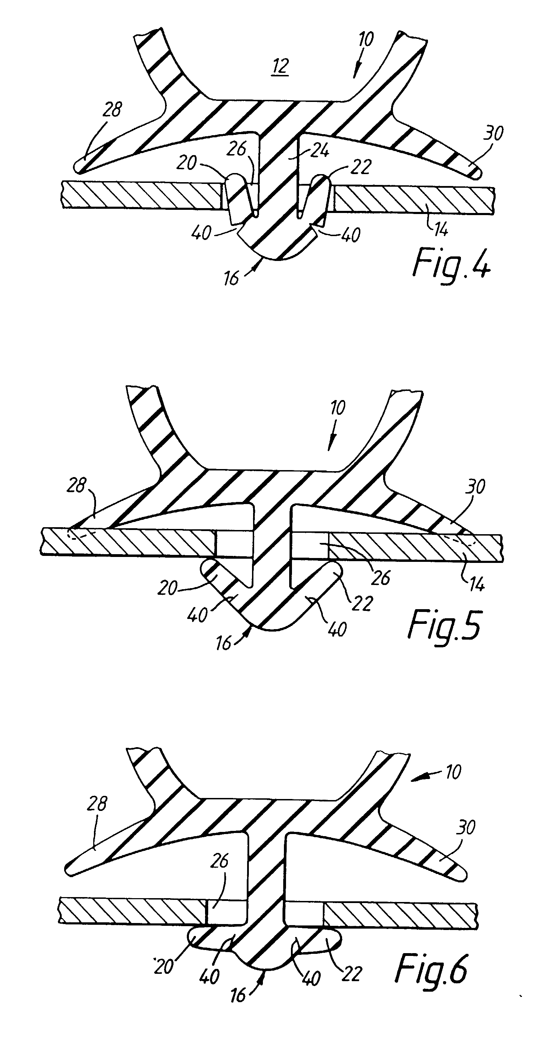

The purpose of the cut 40 is to reduce the force required to fix the strip 10 (or the strip 32) in position, but without reducing the force required to remove the strip. Thus, as shown in Figure 4, the cuts 40 help the arms 20,22 to bend inwardly towards the neck 24 of the clip 16 when the clip is engaged with the hole 26. As shown in Figure 5, the arms 20,22 resile outwardly, as a result of the resilience of the material from which they are made, when the head 18 of the clip has been fully inserted through the hole 26.

Figure 6 shows how the arms 20,22 resist an attempt to pull the strip from the mounting surface 14 or 34. Such an attempt is resisted by the material of the arms 20,22. The cuts 40 do not of course reduce this resistance.

Advantageously, the strip 10 (of Figure 1) or the strip 32 (of Figure 2) is extruded in continuous form, the clips 16 being co-extruded also in continuous form - that is, in the form of a continuous extrusion extending along the length of the strip and having the cross-section shown in Figures 1 and 2. Portions of this continuous extrusion are then cut out and removed at intervals along the strip so as to leave the individual clips 16, the portions cut out and removed corresponding to the spaces between the clips.

Fixing arrangements for attaching sealing, trimming or guiding strips on vehicle bodies desirably produce as low as possible a value of F, where

$$F = \frac{\text{push-on force}}{\text{pull-off force}}$$

The "push-on" force is the force required to fit the strip in position, that is, the force required to push the clips 16 through the holes 26. The "pull-off" force is the force required to remove the strip - that is, the force required to overcome the resistance of the arms 20,22 to removal of the strip. The clips 16 achieve the desired arm of reducing the value of F.

Various other types of fixing arrangements can produce low values for the push-on force; for example, this can be achieved by arrangements in which the strip is held in position by frictional grip on an edge flange. However, such arrangements suffer from the disadvantage that the pull-off force is also relatively low, thus producing a relatively high value for F. Other types of fixing arrangement can produce a relatively low value for F but are costly and time-consuming to implement; this applies, for example, to arrangements in which the strip is attached to the mounting surface by adhesive.

**Claims**

1. A fastening arrangement for fastening a longitudinally extending flexible strip (10,32) to a substantially rigid mounting surface (14,34), comprising clip means (16) attached to the strip (10,32) and extending in a predetermined direction transversely therefrom, the clip means (16) having a head portion (18) including an arm (20,22) made of relatively stiff resilient material extending outwardly of the clip means (16), the material of the arm being bendable into an insertion position close to alignment with the predetermined direction whereby it can be inserted into an aperture (26) in the mounting surface (14,34), the material thereafter resiling into a locking position in which the arm (20,22) makes a more obtuse angle with the predetermined direction and interferes with the mounting surface (14,34) around the aperture (26) to resist withdrawal of the head portion through the aperture (26), characterised in that the material of the arm (20,22) is formed with a slit (40) extending partway through its thickness to facilitate bending of the arm (20,22) into the insertion position and thereby facilitating insertion of the head portion through the aperture (26).

2. A fastening arrangement according to claim 1, characterised in that the clip means (16) comprises a relatively thin neck member (24) extending in the predetermined direction from the strip (10,32) and carrying the head portion (18) at its distal end, the head portion (18) carrying the said arm (20,22).

3. An arrangement according to claim 2, characterised in that the head portion (18) comprises another, similar, arm (20,22), the two arms (20,22) extending in opposite directions from the head portion (18).

4. An arrangement according to claim 3, characterised in that the two arms (20,22) are equi-angularly attached to the head portion (18) and inclined towards the strip (10,32), the slit (40) in each arm (20,22) being formed in the surface of each arm (20,22) facing away from the strip (10,32).

5. A sealing, trimming or guiding strip (10,32) for a motor vehicle body, characterised by a plurality of fastening arrangements each according to any preceding claim and respectively extending from the strip (10,32) at spaced apart predetermined positions therealong.

6. A fastening system for fastening a longitudinally extending sealing, trimming or guiding strip (10,32) to a substantially rigid mounting surface (14,34) in a motor vehicle body, comprising a plurality of clip means (16) attached to the strip (10,32) at predetermined positions spaced apart along its length and extending in generally parallel predetermined directions transversely to the length of the strip (10,32) and a plurality of apertures (26) formed in the mounting surface (14,34) at predetermined positions whose spacings correspond with the spacings between the clip means (16), each clip means (16) comprising a neck (24) extending in the predetermined direction and carrying a head portion (18) at its distal end, the head portion (18) carrying two arms (20,22) which extend transversely to the predetermined direction and which are bendable towards the neck (24) into an insertion position to enable the head portion (18) and the arms (20,22) of each clip means (16) to pass through a respective one of the apertures (26), the arms thereafter resiling into a locking position in which they extend away from the neck (24) to an extent sufficient to interfere with the mounting surface (14,34) around the aperture (26) and resist removal of the strip (10,32) from the mounting surface (14,34), characterised in that each arm (20,22) is formed with a slit (40) in a surface thereof facing away from the strip (10,32) and extending partway only through its thickness to facilitate bending of the arm (20,22) into the insertion position.

7. A system according to claim 6, characterised in that each clip means (16) is integrally attached to the strip (10,32).

8. A system according to claim 7, characterised in that each clip means (16) is co-extruded with the strip (10,32).

9. A system according to any one of claims 6 to 8, characterised in that the strip (10,32) comprises means (28,30) defining a resilient sealing surface extending longitudinally along the strip (10,32) and from which surface each clip means (16) extends in the predetermined direction, the sealing surface resiliently engaging the mounting surface (14,34) when the head portion (18) of each clip means (16) has passed through the respective aperture (26) and the arms (20,22) thereof have resiled into the locking position.

10. A system according to claim 9, characterised in that the strip (10) comprises a longitudinally extending soft flexible tube (12) integral with the sealing surface and extending therealong on the opposite side thereof to the said clip means (16).

**Patentansprüche**

1. Befestigungsanordnung zum Befestigen einer sich längserstreckenden flexiblen Leiste (10, 32) an einer im wesentlichen steifen Befestigungsfläche (14, 34) mit an der Leiste befestigten und sich in einer vorbestimmten Richtung im rechten Winkel davon erstreckenden Klemmitteln (16), wobei die Klemmittel (16) einen Kopfbereich (18) aufweisen, die einen aus einem relativ steifen elastischen Material hergestellten Arm (20, 22) einschließen, der sich auswärts von den Klemmitteln (16) erstreckt und wobei das Material des Arms in eine Einfügeposition in etwa fluchtend mit der vorbestimmten Richtung biegsam ist, wodurch dieser in eine Öffnung (26) in der Befestigungsfläche (14, 34) eingesetzt werden kann und das Material daran anschließend in eine Verschlußposition zurückfedert, in der der Arm (20, 22) einen mehr stumpfen Winkel zu der vorbestimmten Richtung einnimmt und um die Öffnung (26) auf die Befestigungsfläche (14, 34) einwirkt, um einem Zurückziehen des Kopfbereiches durch die Öffnung (26) zu widerstehen,
**dadurch gekennzeichnet,**
daß das Material des Arms (20, 22) mit einem sich teilweise durch dessen Dicke erstreckenden Schlitz (40) ausgebildet ist, um das Biegen des Arms (20, 22) in die Einfügeposition zu erleichtern und damit das Einfügen des Kopfbereiches durch die Öffnung (26) zu erleichtern.

2. Befestigungsanordnung nach Anspruch 1, dadurch gekennzeichnet, daß das Klemmittel (16) ein relativ dünnes Halsteil (24) umfaßt, das sich in die vorbestimmte Richtung von der Leiste (10, 32) forterstreckt und an seinem körperfernen Ende den Kopfbereich (18) trägt, wobei der Kopfbereich (18) den Arm (20, 22) trägt.

3. Anordnung nach Anspruch 2, dadurch gekennzeichnet, daß der Kopfbereich (18) einen weiteren ähnlichen Arm (20, 22) umfaßt, wobei sich die zwei Arme (20, 22) in entgegengesetzte Richtungen von dem Kopfbereich (18) erstrecken.

4. Anordnung nach Anspruch 3, dadurch gekennzeichnet, daß die zwei Arme (20, 22) gleichwinklig an den Kopfbereich (18) angefügt und zur Leiste (10, 32) hin geneigt sind, wobei der Schlitz (40) in jedem Arm (20, 22) in der Fläche jedes Arms (20, 22) ausgebildet ist, die von der Leiste (10, 32) abgewandt ist.

5. Dichtungs-, Trimm- oder Führungsleiste (10, 32) für eine Kraftfahrzeugkarosserie,
**gekennzeichnet durch**
eine Vielzahl von Befestigungsanordnungen nach einem vorhergehenden Anspruch und sich entsprechend von der Leiste (10, 32) beabstandet an vorbestimmten Stellen entlang der Leiste (10, 32) erstreckend.

6. Befestigungssystem zum Befestigen einer sich längserstreckenden Dichtungs-, Trimm- oder Führungsleiste (10, 32) an einer im wesentlichen steifen Befestigungsfläche (14, 34) an einer Kraftfahrzeugkarosserie mit einer Vielzahl von an der Leiste (10, 32) an vorbestimmten, entlang der Länge der Leiste (10, 32) beabstandeten Stellen befestigten und sich im wesentlichen parallel in vorbestimmter Richtung im rechten Winkel zur Länge der Leiste (10, 32) erstreckenden Klemmitteln (16) und mit einer Vielzahl von in der Befestigungsfläche (14, 34) an vorbestimmten Stellen ausgebildeten Öffnungen (26), wobei der Abstand der Öffnungen (26) voneinander dem Abstand zwischen den Klemmitteln (16) entspricht und jedes Klemmittel (16) einen sich in die vorbestimmte Richtung erstreckenden, am körperfernen Ende einen Kopfbereich (18) tragenden Hals (24) aufweist, wobei der Kopfbereich (18) zwei Arme (20, 22) trägt, die sich quer zu der vorbestimmten Richtung erstrecken und die zum Hals (24) hin in eine Einfügeposition biegbar sind, um den Kopfbereich (18) und den Armen (20, 22) jedes Klemmittels (16) zu ermöglichen, durch eine entsprechende Öffnung (26) hindurchzutreten, woran anschließend die Arme in eine Verschlußposition zurückfedern, in der diese sich bis zu einem geeigneten Maß von dem Hals (24) forterstrecken, um um die Öffnung (26) auf die Befestigungsfläche (14, 34) einzuwirken und einem Zurückziehen der Leiste (10, 32) von der Befestigungsfläche (14, 34) zu widerstehen,
**dadurch gekennzeichnet,**
daß jeder Arm (20, 22) in einer von der Leiste (10, 32) fortweisenden Fläche mit einem Schlitz (40) ausgebildet ist, der sich teilweise durch die Dicke des Arms (20, 22) erstreckt, um das Biegen des Arms (20, 22) in die Einfügeposition zu erleichtern.

7. System nach Anspruch 6, dadurch gekennzeichnet, daß jedes Klemmittel (16) einstückig an der Leiste (10, 32) befestigt ist.

8. System nach Anspruch 7, dadurch gekennzeichnet, daß jedes Klemmittel (16) mit der Leiste (10, 32) zusammen extrudiert ist.

9. System nach einem der Ansprüche 6 bis 8, dadurch gekennzeichnet, daß die Leiste (10, 32) eine sich der Länge nach entlang der Leiste (10, 32) erstreckende elastische Dichtfläche bildende Mittel (28, 30) umfaßt, wobei sich von dieser Fläche jedes Klemmittel (16) in die vorbestimmte Richtung erstreckt und die Dichtfläche elastisch mit der Befestigungsfläche (14, 34) in Eingriff tritt, wenn der Kopfbereich (18) eines jeden Klemmittels (16) durch die entsprechende Öffnung (26) hindurchgetreten ist und die Arme (20, 22) davon in die Verschlußposition zurückgefedert sind.

10. System nach Anspruch 9, dadurch gekennzeichnet, daß die Leiste (10) einen sich längserstreckenden, weichen elastischen Schlauch (12) umfaßt, der sich einstückig mit der Dichtfläche entlang dieser auf der gegenüberliegenden Seite zu den Klemmitteln (16) erstreckt.

**Revendications**

1. Ensemble de fixation d'un profilé flexible longitudinal (10, 32) à une surface pratiquement rigide (14, 34) de montage, comprenant des agrafes (16) fixées au profilé (10, 32) et dépassant en direction prédéterminée transversalement au profilé, les agrafes (16) ayant une partie de tête (18) qui comporte un bras (20, 22) d'un matériau élastique relativement rigide dépassant vers l'extérieur de l'agrafe (16), le matériau du bras pouvant fléchir dans une position d'insertion proche de l'alignement sur la direction prédéterminée si bien qu'il peut être introduit dans l'orifice (26) de la surface de montage (14, 34), le matériau revenant ensuite élastiquement en position de blocage dans laquelle le bras (20, 22) forme un angle plus obtus avec la direction prédéterminée et coopère avec la surface de montage (14, 34) entourant l'orifice (26) pour résister à l'arrachement de la partie de tête par l'orifice (26), caractérisé en ce que le matériau du bras (20, 22) est réalisé avec une fente (40) disposée partiellement dans son épaisseur afin que le fléchissement du bras (20, 22) vers la position d'insertion soit plus facile et que l'insertion de la partie de tête par l'orifice (26) soit ainsi plus facile.

**2.** Ensemble de fixation selon la revendication 1, caractérisé en ce que l'agrafe (16) comporte un organe de col relativement mince (24) qui s'étend dans la direction prédéterminée depuis le profilé (10, 32) et qui porte la partie de tête (18) à son extrémité externe, la partie de tête (18) portant le bras (20, 22).

**3.** Ensemble selon la revendication 2, caractérisé en ce que la partie de tête (18) comporte un autre bras semblable (20, 22), les deux bras (20, 22) s'étendant en sens opposé depuis la partie de tête (18).

**4.** Ensemble selon la revendication 3, caractérisé en ce que les deux bras (20, 22) sont fixés avec des angles égaux sur la partie de tête (18) et sont inclinés vers le profilé (10, 32), la fente (40) de chaque bras (20, 22) étant formée à la surface de chaque bras (20, 22) tournée du côté opposé au profilé (10, 32).

**5.** Profilé d'étanchéité, décoratif ou de guidage (10, 32) de carrosserie de véhicule à moteur, caractérisé par plusieurs ensembles de fixation réalisés chacun selon l'une quelconque des revendications précédentes et s'étendant depuis le profilé (10, 32) à des positions espacées prédéterminées le long du profilé.

**6.** Système de fixation d'un profilé longitudinal d'étanchéité, décoratif ou de guidage (10, 32) sur une surface pratiquement rigide (14, 34) de montage dans une carrosserie de véhicule à moteur, comprenant plusieurs agrafes (16) fixées au profilé (10, 32) à des positions prédéterminées espacées sur sa longueur et s'étendant en directions prédéterminées parallèles de façon générale transversalement à la longueur du profilé (10, 32), et plusieurs orifices (26) formés dans la surface de montage (14, 34) à des emplacements prédéterminés dont les espacements correspondent aux espacements des agrafes (16), chaque agrafe (16) ayant un col (24) qui s'étend dans la direction prédéterminée et qui porte une partie de tête (18) à son extrémité externe, la partie de tête (18) portant deux bras (20, 22) qui s'étendent transversalement à la direction prédéterminée et qui peuvent fléchir vers le col (24) dans une position d'insertion pour permettre à la partie de tête (18) et aux bras (20, 22) de chaque agrafe (16) de passer dans une ouverture respective (26), les bras revenant ensuite élastiquement en position de blocage dans laquelle ils s'écartent du col (24) d'une quantité suffisante pour coopérer avec la surface de montage (14, 34) autour de l'orifice (26) et résister à l'arrachement du profilé (10, 32) de la surface de montage (14, 34), caractérisé en ce que chaque bras (20, 22) est formé avec une fente (40) dans une surface tournée du côté opposé au profilé (10, 32) et s'étendant partiellement dans son épaisseur pour faciliter la flexion du bras (20, 22) dans la position d'insertion.

**7.** Système selon la revendication 6, caractérisé en ce que chaque agrafe (16) est fixée en une seule pièce au profilé (10, 32).

**8.** Système selon la revendication 7, caractérisé en ce que chaque agrafe (16) est extrudée simultanément avec le profilé (10, 32).

**9.** Système selon l'une quelconque des revendications 6 à 8, caractérisé en ce que le profilé (10, 32) comporte un dispositif (28, 30) délimitant une surface élastique d'étanchéité qui s'étend longitudinalement le long du profilé (10, 32) et à partir de laquelle chaque agrafe (16) s'étend dans la direction prédéterminée, la surface d'étanchéité coopérant élastiquement avec la surface de montage (14, 34) lorsque la partie de tête (18) de chaque agrafe (16) est passée dans l'orifice respectif (26) et ses bras (20, 22) sont revenus élastiquement en position de blocage.

**10.** Système selon la revendication 9, caractérisé en ce que le profilé (10) comporte un tube flexible et souple longitudinal (12) solidaire de la surface d'étanchéité et s'étendant le long de celle-ci du côté opposé aux agrafes (16).

Fig.1

Fig.2

Fig.3

Fig.4

Fig.5

Fig.6